# EUROPÄISCHE PATENTSCHRIFT

(11) **EP 2 232 333 B1**
(45) Veröffentlichungstag und Bekanntmachung des Hinweises auf die Patenterteilung: **07.09.2011**
(21) Anmeldenummer: 08701575.6
(22) Anmeldetag: 18.01.2008
(51) Int. Cl.: G03B 21/20, H04N 5/74, H04N 9/31

(54) **VIDEOPROJEKTIONSSYSTEM UND SYNCHRONISIERUNGSVERFAHREN**
VIDEO PROJECTION SYSTEM AND SYNCHRONIZATION METHOD
SYSTÈME DE PROJECTION VIDÉO ET PROCÉDÉ DE SYNCHRONISATION

(43) Veröffentlichungstag der Anmeldung: 29.09.2010
(73) Patentinhaber: OSRAM Gesellschaft mit beschränkter Haftung, 81543 München (DE)
(72) Erfinder: BAIER, Markus, 90425 Nürnberg (DE); BRÜCKEL, Martin, 518053 Shenzhen Nashan district (CN); HUBER, Andreas, 82216 Maisach (DE)
(86) Internationale Anmeldenummer: PCT/EP2008/050565
(87) Internationale Veröffentlichungsnummer: WO 2009/089917

(56) Entgegenhaltungen:
- EP-A- 1 345 427
- JP-A- 2003 162 001
- JP-A- 2003 264 091

## Beschreibung

### Technisches Gebiet

Die Erfindung betrifft ein Videoprojektionssystem nach dem Oberbegriff von Patentanspruch 1 sowie ein Verfahren zum Synchronisieren nach dem Oberbegriff von Patentanspruch 4.

### Stand der Technik

Ein Videoprojektionssystem weist eine Lichtquelle auf, die von einem Betriebsgerät zur Abgabe von Licht mit zeitlich veränderlicher Intensität veranlasst wird. Das Licht wird einer Lichtmodulationseinheit zugeführt, damit diese eine Bildinformation aufprägen kann. Üblicherweise gibt die Lichtquelle weißes Licht ab (es kann sich um eine HID-Lampe handeln), und die Lichtmodulationseinheit filtert das Licht einfach. Hierzu kann ein so genanntes Farbrad verwendet werden, das in eine geeignete Stellung verbracht werden muss. Die Lichtmodulationseinheit wird von einer Steuereinheit angesteuert. Eine wechselnde Intensität des von der Lichtquelle abgestrahlten Lichts gehört zum endgültigen Bild dazu. Grund für die Notwendigkeit der Abgabe von Licht mit wechselnder Intensität ist z. B., dass die Farbfilter bei Lichtmodulationseinheiten häufig unterschiedlich wirken: Bei einer ersten Farbe sollte das Licht eine höhere Intensität erhalten als bei einer anderen Farbe. Somit muss die Ansteuerung der Lichtquelle mit der der Lichtmodulationseinheit synchronisiert werden. Hierzu werden Betriebsgerät und Steuereinheit miteinander gekoppelt, z. B. über eine Signalleitung verbunden. Über eine solche Signalleitung müssen nun Synchronisierungssignale gesandt werden. Es ist nun im Stand der Technik die Steuereinheit, die das Synchronisierungssignal an das Betriebsgerät der Lichtquelle aussendet. Das Synchronisierungssignal steht in fester Phasenbeziehung zur Lichtmodulationseinheit. Das Betriebsgerät synchronisiert die Frequenz (durchschnittliche Pulsdauer), den zeitlichen Verlauf und bevorzugt auch so genannte Kommutierungen des Lampenstroms, also Überhöhungen der Intensität vor dem Wechseln, mit dem von der Steuereinheit erhaltenen Synchronisationssignal. In der EP 1 345 427 A1 ist beschrieben, dass die Synchronisationssignale ein vorbestimmtes Muster erhalten können, über das neben der eigentlichen Synchronisation zusätzlich komplexe Informationen übertragen werden.

Es hat sich ergeben, dass bei Videoprojektionssystemen des Standes der Technik die Synchronisation nicht immer fehlerfrei funktioniert. Häufig ist die Elektronik in der Steuereinheit falsch dimensioniert und ungeeignet zur fehlerfreien Abgabe von Synchronisationssignalen. Es können Störungen oder Fehler in der Erzeugung oder Übertragung des Synchronisationssignals auftreten, z. B. können einzelne Pulse völlig ausfallen, oder es kann so genannten Jitter (eine bestimmte Art von Rauschen) geben. Die Abgabe von Licht durch die Lichtquelle passt dann nicht ideal zu der Lichtmodulationseinheit, insbesondere kann die Lampenfrequenz falsch sein, es kann einen unerlaubten Offset-Anteil im Lampenstrom geben, und einzelne Lichtsegmente (Pulsanteile im Lichtstrom) können eine falsche Dauer oder Intensität haben.

### Darstellung der Erfindung

Die Aufgabe der vorliegenden Erfindung ist es, ein Videoprojektionssystem gemäß dem Oberbegriff des Patentanspruchs 1 bereitzustellen, bei dem die Abgabe von Licht durch die Lichtquelle besser als im Stand der Technik mit der Lichtmodulationseinheit gekoppelt ist.

Diese Aufgabe wird bei einem Videoprojektionssystem mit den Merkmalen des Oberbegriffs des Patentanspruchs 1 durch die Merkmale des kennzeichnenden Teils des Patentanspruchs 1 gelöst. Zur Lösung der Aufgabe gehört auch das Bereitstellen eines Verfahrens mit den Merkmalen gemäß Patentanspruch 4.

Besonders vorteilhafte Ausgestaltungen finden sich in den abhängigen Ansprüchen.

Erfindungsgemäß ist somit das Betriebsgerät zum Senden von Synchronisierungssignalen an die Steuereinheit ausgelegt, bevorzugt nur das Betriebsgerät und nicht mehr die Steuereinheit. Die Elektronik eines herkömmlichen Betriebsgeräts (welches bei Lampen auch als elektronisches Vorschaltgerät bezeichnet ist) ist wesentlich weniger fehleranfällig als die im Stand der Technik bei den Steuereinheiten für die Lichtmodulationseinheit verwendete Elektronik. Zudem ist es ohnehin vorteilhaft, die Synchronisierungssignale von demjenigen Gerät auszusenden, das eine aufwändigere Ansteuerung hat, denn das Betriebsgerät muss bei der Abgabe von Licht eine Vielzahl von Parametern berücksichtigen. Bei der Lichtmodulationseinheit ist die Ansteuerung in der Regel einfacher, so muss ein Farbrad nur in einen bestimmten Winkel gedreht werden.

Wie auch aus dem Stand der Technik bekannt, kann die Steuereinheit zum Senden von Steuersignalen zur Festlegung von Betriebsparametern der Lichtquelle an das Betriebsgerät ausgelegt sein. Anders als in der EP 1 345 427 A1 ist jedoch nicht mehr eine Kopplung dieser Steuersignale mit den Synchronisierungssignalen notwendig. Die Steuersignale können nunmehr einfach Zahlwerte zur Festlegung der Betriebsparameter digital angeben.

Es ist durchaus möglich, dass die Steuereinheit einen gewissen Einfluss auf die Synchronisierung behält und diesen über das Senden der Steuersignale zur Festlegung von Betriebsparametern der Lichtquelle ausübt. Dies ist dann möglich, wenn das Betriebsgerät dazu ausgelegt ist, bei zumindest zwei unterschiedlichen Betriebsparametern unterschiedliche Synchronisierungssignale zu bilden bzw. Synchronisierungssignalfolgen.

Neben den eigentlichen Synchronisierungssignalen kann das Betriebsgerät auch Informationen übermitteln, die nicht auf die Synchronisierung bezogen sind und so kann das Betriebsgerät der Steuereinheit Informationen über die Lampenleistung, z. B. über die Lampenspannung und den Lampenstrom, sowie das so genannte Puls-Plateau-Verhältnis bereitstellen. Das Puls-Plateau-Verhältnis bezeichnet das Verhältnis zwischen einer Intensitätsüberhöhung vor dem Wechsel der Intensität (Puls) und der Länge der eigentlichen Lichtabgabe (Plateau).

### Kurze Beschreibung der Zeichnung(en)

Im Folgenden soll die Erfindung anhand eines Ausführungsbeispiels näher erläutert werden. Es zeigt:

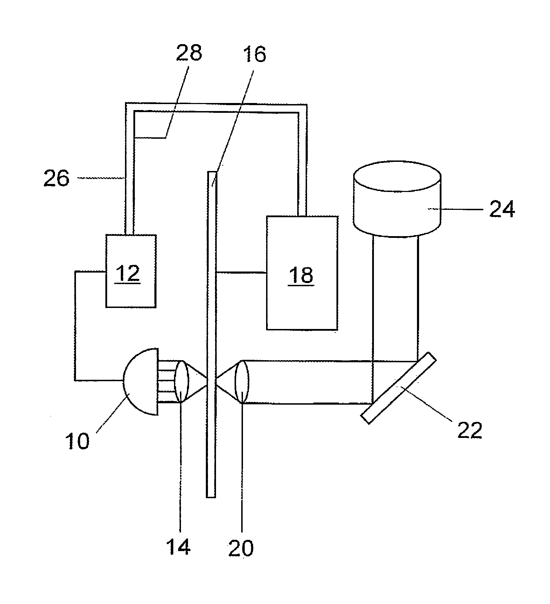

- Fig. 1: eine Schemadarstellung eines erfindungsgemäßen Vi- deoprojektionssystems, bei dem das erfindungsgemäße Verfahren verwendbar ist.

### Bevorzugte Ausführung der Erfindung

In dem in der Figur gezeigten Videoprojektionssystem gibt eine Lampe 10, welche von einem Betriebsgerät (einem elektronischen Vorschaltgerät) 12 angesteuert ist, Licht ab. Die Intensität des von der Lampe 10 abgegebenen Lichts wechselt zwischen einzelnen Teil-Zeitsegmenten. Das Licht wird von einer geeigneten optischen Einheit 14 (schematisch ist eine Linse gezeigt) an eine vorbestimmte Stelle einer Lichtmodulationseinheit 16 gebündelt, welche von einer Steuereinheit 18 angesteuert wird. Die Lichtmodulationseinheit 16 kann als so genanntes Farbrad ausgebildet sein, das von der Steuereinheit 18 gesteuert gedreht wird. Bei jedem Drehwinkel gelangt das Licht durch einen anderen Filter, wodurch die Lichtmodulationseinheit 16 dem von der Lichtquelle 10 ausgehenden Licht eine Farbinformation aufprägt. Das Licht durchläuft anschließend eine weitere optische Einheit 20 (gezeigt ist wiederum eine Linse) und gelangt über einen Auslenkspiegel 22 zu einem Auslass 24. Der Auslenkspiegel 22 kann eine Vielzahl von einzelnen verschwenkbaren Spiegelelementen haben, so dass ein Lichtstrahl zu demjenigen Bildpunkt auf einem Bildschirm oder einer Projektionswand geleitet wird, an dem die durch das Farbrad 16 aufgeprägte Farbe definiert sein soll.

Es muss nun die Abgabe des Lichts durch die Lampe 10 mit der Einstellung des Lichtmodulators 16 synchronisiert sein. Hierzu sind das Betriebsgerät 12 und die Steuereinheit 18 über Verbindungsleitungen 26 und 28 miteinander gekoppelt. Zur Synchronisierung sendet nun das Betriebsgerät 12 Synchronisierungssignale über die erste Verbindungsleitung 26 zur Steuereinheit 18. Das Betriebsgerät 12 empfängt umgekehrt über die zweite Verbindungsleitung 28 Steuersignale, mit Hilfe derer die Steuereinheit 18 bestimmte Betriebsparameter der Lampe 10 festlegt. Betriebsparameter können die Frenquenz des Lampenstroms sein, also die mittlere Periodendauer zwischen je zwei Wechseln in der Stromstärke und damit der Intensität des abgegebenen Lichts. Die Betriebsparameter können auch den zeitlichen Verlauf festlegen, also Variationen in den einzelnen Periodendauern.

Das Betriebsgerät 12 meldet über den Synchronisationssignalen aufgeprägte Signale Informationen über Lampenspannung, Lampenstrom, Lampenleistung, über die Frequenz und auch das Puls-Plateau-Verhältnis an die Steuereinheit 18 zurück.

Dadurch, dass vorliegend das Betriebsgerät 12 die Synchronisierungssignale erzeugt, funktioniert die Synchronisierung besonders gut.

## Patentansprüche

1. Videoprojektionssystem, mit einer Lichtquelle (10), die von einem Betriebsgerät (12) im Betrieb zur Abgabe von Licht mit zeitlich veränderlicher Intensität veranlasst wird, und mit einer Lichtmodulationseinheit (16), die von einer Steuereinheit (18) im Betrieb zum Aufbringen einer Farbinformation auf das von der Lichtquelle ausgehende Licht veranlasst wird, wobei das Betriebsgerät (12) mit der Steuereinheit (18) zum Ermöglichen einer Synchronisierung beider gekoppelt ist,
**dadurch gekennzeichnet,**
**dass** das Betriebsgerät (12) zum Senden von Synchronisierungssignalen an die Steuereinheit (18) ausgelegt ist
und
**dass** die Steuereinheit (18) zum Senden von Steuersignalen zur Festlegung von Betriebsparametern der Lichtquelle (10) an das Betriebsgerät (12) ausgelegt ist.

2. Videoprojektionssystem nach Anspruch 1, **dadurch gekennzeichnet, dass** das Betriebsgerät (12) dazu ausgelegt ist, bei zumindest zwei unterschiedlichen Betriebsparametern unterschiedliche Synchronisierungssignale bzw. Synchronisierungssignalfolgen zu bilden.

3. Videoprojektionssystem nach einem der vorhergehenden Ansprüche, **dadurch gekennzeichnet, dass** das Betriebsgerät (12) dazu ausgelegt ist, mit den Synchronisierungssignalen nicht auf die Synchronisierung bezogene Informationen zu übermitteln.

4. Verfahren zum Synchronisieren der Ansteuerung einer Lichtquelle (10) in einem Videoprojektionssystem durch ein Betriebsgerät (12) einerseits, wobei die Lichtquelle im Betrieb zur Abgabe von Licht mit Zeitlich veränderlicher Intensität veranlasst wird, und einer Lichtmodulationseinheit (16) in dem Videoprojektionssystem durch eine Steuereinheit (18) andererseits, wobei die Lichtmodulationseinheit im Betrieb zum Aufbringen einer Farbinformation auf das von der Lichtquelle ausgehende Licht veranlasst wird,
**dadurch gekennzeichnet, dass**
das Betriebsgerät (12) Synchronisierungssignale an die Steuereinheit (18) aussendet
und dass
die Steuereinheit (18) Steuersignale zur Festlegung von Betriebsparametern der Lichquelle (10) an das Betriebgerät aussendet.

## Claims

1. Video projection system, comprising a light source (10), which is caused to emit light with a temporally variable intensity by an operating device (12) during operation, and comprising a light modulation unit (16), which is caused to apply colour information to the light emerging from the light source by a control unit (18) during operation, the operating device (12) being coupled to the control unit (18) in order to enable them both to be synchronized, **characterized in that** the operating device (12) is designed to transmit synchronization signals to the control unit (18) and **in that** the control unit (18) is designed to transmit control signals for defining operating parameters of the light source (10) to the operating device (12).

2. Video projection system according to Claim 1, **characterized in that** the operating device (12) is designed to form different synchronization signals or synchronization signal sequences in the case of at least two different operating parameters.

3. Video projection system according to any of the preceding claims, **characterized in that** the operating device (12) is designed to communicate information that does not relate to the synchronization with the synchronization signals.

4. Method for synchronizing the driving of a light source (10) in a video projection system by an operating device (12), firstly, the light source being caused to emit light with a temporally variable intensity during operation, and of a light modulation unit (16) in the video projection system by a control unit (18), secondly, the light modulation unit being caused to apply colour information to the light emerging from the light source during operation, **characterized in that** the operating device (12) emits synchronization signals to the control unit (18), and **in that** the control unit (18) transmits control signals for defining operating parameters of the light source (10) to the operating device.

## Revendications

1. Système de projection vidéo comprenant une source lumineuse (10), qui est commandée par un appareil de service (12) pendant le fonctionnement pour l'émission de lumière avec une intensité variable dans le temps, et une unité de modulation de lumière (16), qui est commandée par une unité de commande (18) pendant le fonctionnement pour l'application d'une information de couleur sur la lumière partant de la source lumineuse, l'appareil de service (12) étant couplé avec l'unité de commande (18) pour permettre une synchronisation des deux,
**caractérisé en ce que**
l'appareil de service (12) est conçu pour envoyer des signaux de synchronisation à l'unité de commande (18)
et
**en ce que** l'unité de commande (18) est conçue pour envoyer des signaux de commande destinés à définir des paramètres de service de la source lumineuse (10) à l'appareil de service (12).

2. Système de projection vidéo selon la revendication 1, **caractérisé en ce que** l'appareil de service (12) est conçu pour former différents signaux de synchronisation et séquences de signaux de synchronisation avec au moins deux paramètres de service différents.

3. Système de projection vidéo selon l'une quelconque des revendications précédentes, **caractérisé en ce que** l'appareil de service (12) est conçu pour transmettre des informations non spécifiques à la synchronisation avec les signaux de synchronisation.

4. Procédé pour synchroniser l'activation d'une source lumineuse (10) dans un système de projection vidéo par un appareil de service (12) d'une part, la source lumineuse étant contrôlée pendant le fonctionnement pour l'émission de lumière avec une intensité variable dans le temps, et l'activation d'une unité de modulation de lumière (16) dans le système de projection vidéo par une unité de commande (18) d'autre part, l'unité de modulation de lumière étant commandée pendant le fonctionnement pour l'application d'une information de couleur sur la lumière partant de la source lumineuse,
**caractérisé en ce que**
l'appareil de service (12) envoie des signaux de synchronisation à l'unité de commande (18)
et **en ce que**
l'unité de commande (18) envoie à l'appareil de service des signaux de commande pour définir des paramètres de service de la source lumineuse (10).
